# FASCICULE DE BREVET EUROPEEN

(11) **EP 3 861 328 B1**
(45) Date de publication et mention de la délivrance du brevet: **08.05.2024**
(21) Numéro de dépôt: 19829285.6
(22) Date de dépôt: 15.11.2019
(51) Int. Cl.: G01N 23/223, B29C 64/386, B29C 64/153, B29C 64/364, B33Y 10/00, B33Y 50/00

(54) **METHODE D'ANALYSE DE FUMEES D'EVAPORATION, PRODUIT PROGRAMME D'ORDINATEUR, SYSTEME D'ANALYSE ET INSTALLATION DE FABRICATION ADDITIVE ASSOCIES**
VERFAHREN ZUR ANALYSE VON VERDAMPFUNGSGASEN, COMPUTERPROGRAMMPRODUKT, ANALYSESYSTEM UND DAMIT VERBUNDENE GENERATIVE FERTIGUNGSEINRICHTUNG
METHOD FOR ANALYZING EVAPORATION FUMES, COMPUTER PROGRAM PRODUCT, ANALYSIS SYSTEM AND ADDITIVE MANUFACTURING FACILITY ASSOCIATED THEREWITH

(30) Priorité: 20.11.2018 EP 18306533; 29.11.2018 FR 1872097
(43) Date de publication de la demande: 11.08.2021
(73) Titulaire: Commissariat à l'énergie atomique et aux énergies alternatives, 75015 Paris (FR)
(72) Inventeur: GARANDET, Jean-Paul, 92210 SAINT CLOUD (FR); PARADIS, Hugues, 91400 ORSAY (FR); PENOT, Jean-Daniel, 92150 SURESNES (FR); VIENNE, Caroline, 91400 ORSAY (FR)
(74) Mandataire: Brevalex
(86) Numéro de dépôt international: PCT/FR2019/052727
(87) Numéro de publication internationale: WO 2020/104744

(56) Documents cités:
- EP-A1- 2 881 973
- WO-A1-2017/036868
- FR-A- 1 461 909

## Description

### DOMAINE TECHNIQUE

La présente invention concerne une méthode d'analyse de fumées d'évaporation émises durant la mise en oeuvre d'un procédé de fabrication additive employant au moins une espèce chimique en tant que matière fusible. L'invention concerne également un produit programme d'ordinateur, un dispositif de traitement, un système d'analyse et une installation de fabrication additive.

L'invention s'applique au domaine de la fabrication additive, et plus particulièrement à la caractérisation de fumées générées au cours de procédés de fabrication additive.

### ÉTAT DE LA TECHNIQUE ANTÉRIEURE

Les procédés de fabrication additive consistent, classiquement, en la fabrication d'objets solides par la mise en forme de matière en phase liquide, la matière ayant été portée à une température supérieure à sa température de fusion. De tels procédés sont classiquement mis en oeuvre au moyen d'un système de fabrication additive.

De façon connue, de tels procédés de fabrication additive comprennent, par exemple, les procédés dits de fusion sur lit de poudres (ou encore PBF, acronyme de l'expression anglaise « *Powder Bed Fusion* ») et les procédés dits de dépôt de matière sous énergie concentrée (ou encore DED, acronyme de l'expression anglaise « *Directed Energy Déposition* »).

Le document WO 2017/036868 A1 divulgue une méthode de surveillance par spectroscopie de rayons X à dispersion d'énergie d'un procédé de fabrication additive.

Le document EP 2881973 A1 divulgue une méthode d'analyse par fluorescence X de fumées émises durant la mise en oeuvre d'un procédé de dépôt physique en phase vapeur.

La mise en oeuvre de tels procédés de fabrication additive est susceptible de conduire à une évaporation de matière sous forme de fumées.

Un tel phénomène est problématique.

En effet, un tel phénomène conduit à une perte de masse au niveau de la matière solide obtenue au cours du procédé de fabrication additive, ce qui est susceptible de conférer à la pièce fabriquée des propriétés différentes de celles qui sont attendues, par exemple des propriétés mécaniques différentes de celles qui sont attendues.

En outre, dans le cas où la matière utilisée est un mélange de composants destiné à former un alliage après fusion puis solidification, il est possible que lesdits composants s'évaporent dans des proportions différentes, ce qui est susceptible de conférer localement à l'alliage une composition différente de celle souhaitée, et donc potentiellement des propriétés différentes de celles visées, par exemple des propriétés physico-chimiques différentes de celles visées.

Enfin, de telles fumées polluent l'intérieur du système de fabrication additive et sont susceptibles d'en perturber le fonctionnement, par exemple en générant des dépôts dans le système de fabrication additive, par exemple des dépôts sur des miroirs et des optiques d'émission de source(s) laser utilisées pour provoquer la fusion de la matière.

Pour évaluer les proportions relatives des différents composants évaporés sous forme de fumée, il est connu de prélever un échantillon de gaz présents dans le système de fabrication additive, de tirer l'échantillon au vide et de réaliser une ionisation de la matière résiduelle, de façon à déterminer la composition de l'échantillon par spectrométrie de masse.

Néanmoins, une telle méthode d'analyse ne donne pas entière satisfaction.

En effet, une telle méthode d'analyse est coûteuse. En outre, du fait des différentes étapes requises pour la mise en oeuvre de l'analyse par spectrométrie de masse, notamment le transport de l'échantillon et le tirage au vide qui sont susceptibles de modifier la composition dudit échantillon analysé, les résultats obtenus par la mise en oeuvre d'une telle analyse sont susceptibles de différer des valeurs réelles de composition dans les fumées. En outre, une telle méthode ne convient pas pour fournir une analyse en temps réel de la composition des fumées d'évaporation.

Un but de l'invention est donc de proposer une méthode d'analyse des fumées d'évaporation émises durant la mise en oeuvre d'un procédé de fabrication additive qui fournisse des résultats plus fiables que ceux obtenus par le recours à un spectromètre de masse, tout en présentant un coût raisonnable et en autorisant une analyse en temps réel.

### EXPOSÉ DE L'INVENTION

A cet effet, l'invention a pour objet une méthode d'analyse du type précité, comprenant les étapes suivantes :
- émission d'au moins un faisceau de rayons X pour irradier au moins une partie des fumées d'évaporation émises au cours de la mise en oeuvre du procédé de fabrication additive ;
- détection, par un détecteur, de photons de fluorescence émis par l'au moins une partie des fumées d'évaporation irradiée par l'au moins un faisceau de rayons X, et génération d'un signal de détection représentatif de l'énergie déposée par les photons de fluorescence dans le détecteur ; et
- identification, à partir du signal de détection, de tout ou partie des espèces chimiques présente dans les fumées d'évaporation.

En effet, une telle méthode conduit à une analyse *in situ* des fumées émises durant la fabrication additive. Le prélèvement et le traitement d'un échantillon des fumées ne sont donc plus requis. Il en résulte une détermination de la composition des fumées d'évaporation plus fiable que celle obtenue par la mise en oeuvre des méthodes d'analyse connues mettant en oeuvre un spectromètre de masse.

Une telle méthode d'analyse autorise également un suivi en temps réel de la composition des fumées d'évaporation, selon la durée pendant laquelle le signal de détection est analysé.

En outre, le recours à la fluorescence X autorise une mise en oeuvre plus aisée et moins coûteuse que le recours à un tel spectromètre de masse.

Suivant d'autres aspects avantageux de l'invention, la méthode d'analyse comporte une ou plusieurs des caractéristiques suivantes, prise(s) isolément ou suivant toutes les combinaisons techniquement possibles :
- l'étape d'identification comprend la prise en compte d'une absorption des photons de fluorescence causée par au moins un gaz formant une atmosphère de travail lors de la mise en oeuvre du procédé de fabrication additive.
- la méthode d'analyse comporte, en outre, une étape de détermination de la proportion relative de chaque espèce chimique identifiée dans les fumée d'évaporation ;
- la méthode d'analyse comporte, en outre, le calcul, à partir du signal de détection et de caractéristiques prédéterminées du procédé de fabrication additive, d'une quantité de matière de chaque espèce chimique qui s'est évaporée sous forme de fumée au cours d'un intervalle de temps donné durant la mise en oeuvre du procédé de fabrication additive ;
- la méthode d'analyse comporte, en outre, l'association du résultat de l'étape l'identification, de l'étape de détermination et/ou de l'étape de calcul à une position d'une partie d'une pièce fabriquée au cours de la mise en oeuvre du procédé de fabrication additive, dans un repère prédéterminé.

L'invention a également pour objet un produit programme d'ordinateur comportant des instructions de code de programme qui, lorsqu'elles sont exécutées par un ordinateur, mettent en oeuvre les étapes de la méthode d'analyse tel que définie ci-dessus, en dehors des étapes d'émission et de détection.

En outre, l'invention a pour objet un système d'analyse pour l'analyse de fumées d'évaporation émises durant la mise en oeuvre d'un procédé de fabrication additive employant au moins une espèce chimique, le système d'analyse comprenant :
- au moins une source de rayons X configurée pour émettre un faisceau de rayons X destiné à irradier au moins une partie des fumées d'évaporation émises au cours de la mise en oeuvre du procédé de fabrication additive ;
- au moins un détecteur configuré pour détecter des photons de fluorescence émis par l'au moins une partie des fumées d'évaporation irradiée par l'au moins un faisceau de rayons X, et pour générer un signal de détection représentatif de l'énergie déposée par les photons de fluorescence dans le détecteur correspondant ; et
- un dispositif de traitement configuré pour identifier tout ou partie des espèces chimiques présentes dans des fumées d'évaporation émises au cours de la mise en oeuvre d'un procédé de fabrication additive, à partir d'un signal de détection généré par un détecteur et représentatif d'une énergie déposée, dans le détecteur, par des photons de fluorescence émis par au moins une partie des fumées d'évaporation suite à leur irradiation par au moins un faisceau de rayons X.

Suivant d'autres aspects avantageux de l'invention, le système d'analyse comporte une ou plusieurs des caractéristiques suivantes, prise(s) isolément ou suivant toutes les combinaisons techniquement possibles :
- au moins une source de rayons X est configurée pour émettre un faisceau de rayons X collimaté, présentant, de préférence, une section circulaire dans un plan orthogonal à sa direction de propagation, et présentant, par exemple, un diamètre compris entre 5 mm et 3 cm, préférentiellement entre 1 cm et 2 cm ;
- au moins une source de rayons X est configurée pour émettre un faisceau de rayons X collimaté dans un premier plan contenant l'axe de propagation du faisceau de rayons X, et divergent dans un deuxième plan orthogonal au premier plan et contenant ledit axe de propagation, et présentant, de préférence, une épaisseur, dans le premier plan, comprise entre 5 mm et 5 cm, préférentiellement entre 1 cm et 3 cm.

En outre, l'invention a pour objet une installation de fabrication additive comprenant un système de fabrication additive et un système d'analyse tel que défini ci-dessus, chaque source de rayons X étant configurée pour émettre un faisceau de rayons X dans le système de fabrication additive, chaque détecteur de photons étant configuré pour collecter des photons présents dans le système de fabrication additive.

Suivant d'autres aspects avantageux de l'invention, l'installation de fabrication additive comporte une ou plusieurs des caractéristiques suivantes, prise(s) isolément ou suivant toutes les combinaisons techniquement possibles :
- chaque source de rayons X est configurée de sorte que le faisceau de rayons X correspondant se propage à une distance comprise entre 2 cm et 10 cm, de préférence entre 3 cm et 5 cm, au-dessus d'une surface libre d'un bain de fusion généré, au sein du système de fabrication additive, par le fonctionnement du système de fabrication additive ;
- chaque détecteur est agencé pour se trouver à une distance comprise entre 2 cm et 40 cm, de préférence entre 5 cm et 15 cm, au-dessus d'une surface libre d'un bain de fusion généré, au sein du système de fabrication additive, par le fonctionnement du système de fabrication additive.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une représentation schématique d'une installation de fabrication additive mettant en oeuvre un procédé de fabrication additive PBF, et comprenant un système d'analyse selon l'invention ; et
- la figure 2 est une représentation schématique d'une installation de fabrication additive mettant en oeuvre un procédé de fabrication additive DED, et comprenant un système d'analyse selon l'invention.

### EXPOSÉ DÉTAILLÉ DE MODES DE RÉALISATION PARTICULIERS

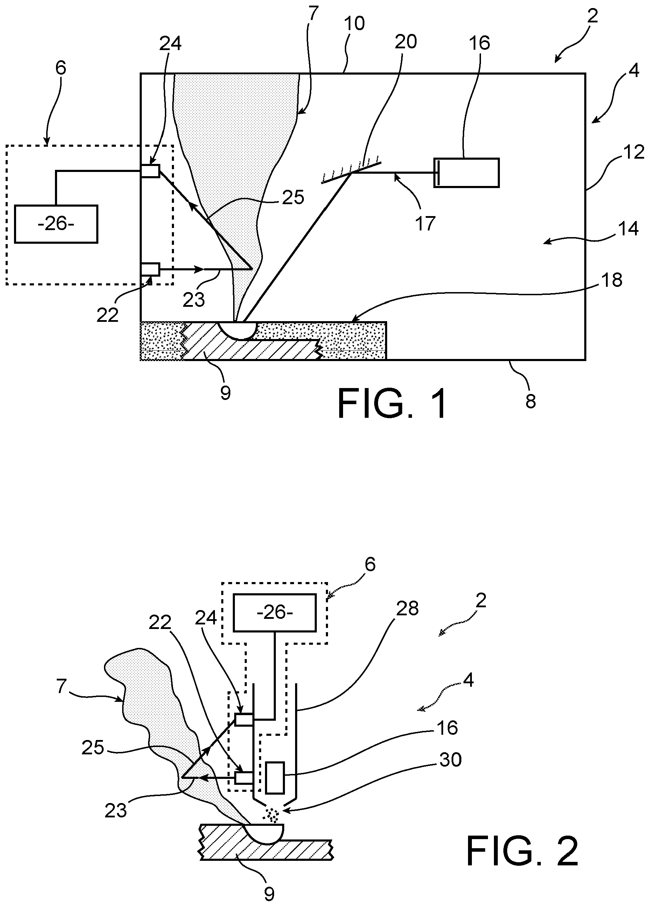

Une installation 2 de fabrication additive selon l'invention est schématiquement illustrée par la figure 1. L'installation 2 est destinée à la mise en oeuvre d'un procédé de fabrication additive PBF.

Une description de l'installation 2 destinée à la mise en oeuvre d'un procédé de fabrication additive DED sera fournie ultérieurement, en référence à la figure 2.

Comme cela apparaît sur la figure 1, l'installation 2 comprend un système de fabrication 4 et un système d'analyse 6.

Le système de fabrication 4 est destiné à la mise en oeuvre d'un procédé de fabrication additive. En outre, le système d'analyse 6 est destiné à la mise en oeuvre d'une méthode d'analyse in situ de fumées d'évaporation 7 émises durant la mise en oeuvre du procédé de fabrication additive.

De façon classique, le système de fabrication 4 comprend un substrat, ici un plateau support 8, destiné à supporter une pièce 9 lors de sa fabrication par le procédé de fabrication additive. Le système de fabrication 4 comporte également un plafond 10 s'étendant en regard du plateau support 8, le plafond 10 et le plateau support 8 étant séparés l'un de l'autre par une paroi latérale 12. Le plateau support 8, le plafond 10 et la paroi latérale 12 définissent entre eux une cavité 14.

Le système de fabrication 4 comporte également un émetteur 16 configuré pour émettre un faisceau de particules 17, par exemple des photons ou des électrons, destinées à mettre en fusion localement un lit de poudres 18 agencé sur le plateau support 8.

La partie du lit de poudres 18 mise en fusion par le faisceau de particules 17 est encore appelée « bain de fusion ».

De façon connue, le système de fabrication 4 comporte également un organe de déflexion 20 configuré pour défléchir le faisceau de particules 17 issu de l'émetteur 16 afin de modifier la zone du lit de poudres 18 qui est irradiée par ledit faisceau de particules 17 issu de l'émetteur 16. Par exemple, dans le cas où l'émetteur 16 est un laser, l'organe de déflexion 20 est un miroir, comme représenté sur la figure 1.

Par exemple, dans le cas où le système de fabrication 4 est destiné à la mise en oeuvre d'un procédé de fabrication additive PBF, l'émetteur 16 est configuré de sorte que la puissance déposée dans la zone du lit de poudres 18 par le faisceau de particules 17 issu de l'émetteur 16 soit comprise entre 50 W (watt) et 2000 W. En outre, la durée durant laquelle chaque zone du lit de poudres 18 est irradiée par le faisceau de particules 17 issu de l'émetteur 16 est, par exemple, comprise entre 10 µs (microseconde) et 1000 µs, préférentiellement entre 50 µs et 300 µs. En outre, l'organe de déflexion 20 est, par exemple, configuré de sorte que la zone du lit de poudres 18 irradiée par le faisceau de particules 17 issu de l'émetteur 16 se déplace à une vitesse comprise entre 0,2 m/s (mètre par seconde) et 10 m/s.

Le système d'analyse 6 comporte au moins une source 22 de rayons X, dite « source X », au moins un détecteur 24, et un dispositif de traitement 26 connecté en sortie de chaque détecteur 24.

Chaque source X 22 est configurée pour émettre un faisceau 23 de rayons X dans la cavité 14. En particulier, chaque source X 22 est configurée pour émettre un faisceau 23 de rayons X destiné à irradier au moins une partie des fumées d'évaporation 7 générées dans le système de fabrication 4, plus précisément dans la cavité 14, lors de la mise en oeuvre du procédé de fabrication additive.

Chaque détecteur 24 est configuré pour collecter des photons de fluorescence émis par les fumées d'évaporation 7 qui ont été irradiées par le faisceau 23 de rayons X émis par la source X 22, et pour convertir l'énergie déposée par les photons collectés en signal électrique, dit « signal de détection ».

Par la suite, l'expression « signal de fluorescence » sera employée pour désigner les photons de fluorescence émis par les fumées d'évaporation 7 qui ont été irradiées par le faisceau 23 de rayons X émis par la source X 22. Le signal de fluorescence est désigné par la référence 25.

Le dispositif de traitement 26 est configuré pour recevoir en entrée le signal de détection issu de chaque détecteur 24, et pour déterminer des caractéristiques des fumées d'évaporation 7 à partir de chaque signal de détection.

Le dispositif de traitement 26 est, par exemple, un ordinateur, ou encore un circuit de type ASIC (de l'anglais « *application-specific integrated circuit* », signifiant circuit intégré propre à une application) ou un circuit logique programmable (en anglais, *« programmable logic device* »), tel qu'un circuit FPGA (de l'anglais *« field-programmable gâte array* », signifiant réseau de portes programmables *in situ*).

De préférence, chaque source X 22 est montée dans la cavité 14, sur la paroi latérale 12. De préférence également, chaque détecteur 24 est monté dans la cavité 14, sur la paroi latérale 12. En outre, le dispositif de traitement 26 est déporté en dehors du système de fabrication 4. De cette façon, un contrôle plus aisé de sa température, notamment de la température des détecteurs 24, est autorisé. En outre, de cette façon, l'encombrement du système d'analyse 6 dans la cavité 14 est limité ; en particulier, les risques d'interférence avec le faisceau de particules 17 issu de l'émetteur 16 sont réduits.

Avantageusement, chaque source X 22 est configurée de façon à ce que le faisceau 23 de rayons X correspondant n'interagisse pas avec le lit de poudres 18 ou avec la pièce 9 en cours de fabrication.

Par exemple, chaque source X 22 est configurée de façon à émettre un faisceau 23 de rayons X collimaté, présentant, dans un plan orthogonal à sa direction de propagation, une section circulaire. Dans ce cas, le diamètre du faisceau 23 de rayons X est, par exemple, compris entre 5 mm (millimètre) et 3 cm (centimètre), préférentiellement entre 1 cm et 2 cm.

Par « faisceau collimaté », il est entendu, au sens de la présente invention, un faisceau présentant une étendue contrôlée, par exemple constante, le long de son axe de propagation. Un tel faisceau collimaté est, par exemple, obtenu grâce à l'utilisation d'un élément en plomb doté d'une ouverture présentant les dimensions souhaitées pour l'étendue du faisceau.

En variante, chaque source X 22 est configurée de sorte à émettre un faisceau 23 de rayons X « en éventail », c'est-à-dire un faisceau 23 de rayons X collimaté dans un premier plan contenant l'axe de propagation du faisceau 23 de rayons X, et divergent dans un deuxième plan orthogonal au premier plan et contenant ledit axe de propagation. De préférence, le deuxième plan est parallèle au plateau support 8, c'est-à-dire parallèle au lit de poudres 18. Dans ce cas, l'épaisseur du faisceau en éventail est, par exemple, comprise entre 5 mm et 5 cm, préférentiellement entre 1 cm et 3 cm.

De façon avantageuse, chaque source X 22 est configurée de façon à émettre un faisceau 23 de rayons X se propageant à une distance comprise entre 2 cm et 10 cm au-dessus du lit de poudres 18, préférentiellement entre 3 cm et 5 cm au-dessus du lit de poudres 18. Une telle distance est avantageuse, dans la mesure où l'écoulement des fumées est généralement turbulent à des distances supérieures du lit de poudres 18. Un tel choix de valeurs est également avantageux dans la mesure où l'altitude de gouttes liquides éjectées depuis la zone du lit de poudres 18 qui est irradiée par le faisceau issu de l'émetteur 16 (également appelées « éjectas ») reste généralement inférieure à de telles valeurs.

De tels dimensionnements de chaque source X 22 visent à maximiser le volume de fumées irradiées par le faisceau 23 de rayons X, tout en limitant les risques d'interactions avec des éléments autres que les fumées d'évaporation 7, interactions qui seraient susceptibles de nuire à la mise en oeuvre de la méthode d'analyse selon l'invention.

Avantageusement, chaque détecteur 24 est agencé à une distance comprise entre 2 cm et 30 cm au-dessus du lit de poudres 18, préférentiellement entre 5 cm et 15 cm au-dessus du lit de poudres 18.

Chaque détecteur 24 comporte un organe de collecte de photons et un organe de conversion (non représentés). L'organe de collecte est configuré pour collecter le signal de fluorescence. L'organe de conversion est configuré pour convertir l'énergie déposée par les photons collectés en le signal de détection.

De préférence, le détecteur 24 est collimaté et blindé, c'est-à-dire qu'il est à la fois orienté pour détecter des photons d'une zone préalablement définie et également protégé de sorte à recevoir le moins possible de photons ne provenant pas de ladite zone. Une telle protection de chaque détecteur 24 vise à limiter les risques de détection de photons émis par des éléments autres que les fumées d'évaporation 7, interactions qui seraient susceptibles de nuire à la mise en oeuvre de la méthode d'analyse selon l'invention, notamment en réduisant le rapport signal sur bruit du signal de détection.

Avantageusement, le système d'analyse 6 comporte une pluralité de sources X 22 et/ou une pluralité de détecteurs 24, afin d'accroître le nombre de photons émis par fluorescence par les fumées et d'accroître le nombre de photons de fluorescence collectés respectivement, en particulier si les sources X 22 ou les détecteurs 24 sont collimatés.

Le dispositif de traitement 26 est configuré pour recevoir le signal de détection généré par chaque détecteur 24.

Le dispositif de traitement 26 est également configuré pour identifier, à partir du signal de détection reçu depuis chaque détecteur 24, tout ou partie des espèces chimiques présentes dans les fumées d'évaporation 7. Plus précisément, le dispositif de traitement 26 est configuré pour identifier toute ou une partie des espèces chimiques présentes dans les fumées d'évaporation 7 à partir du signal de détection reçu par au moins un détecteur 24 et à l'aide d'un étalonnage. Cet étalonnage correspond, par exemple, à une conversion entre une mesure du signal de fluorescence 25 dans une configuration de référence en termes de réglages et de poudres d'une part, et la composition réelle desdites poudres d'autre part. Le dispositif de traitement 26 est également configuré pour mettre en oeuvre une analyse du signal de fluorescence, par exemple une étude spectrométrique du signal de fluorescence.

Le dispositif de traitement 26 est également configuré pour détecter, à partir du signal de détection reçu depuis chaque détecteur 24, les proportions relatives, dans les fumées d'évaporation 7, de chaque espèce chimique identifiée. Plus précisément, le dispositif de traitement 26 est configuré pour estimer, à partir du signal de détection reçu depuis chaque détecteur 24, les proportions relatives, dans les fumées d'évaporation 7, de chaque espèce chimique identifiée. Un tel résultat est, par un exemple, tiré du signal de fluorescence 25 émis au cours de l'étalonnage.

Avantageusement, le dispositif de traitement 26 est également configuré pour déterminer, pour chaque espèce chimique identifiée, et à partir du signal de détection reçu depuis chaque détecteur 24, la quantité de matière de ladite espèce chimique qui s'est évaporée sous forme de fumée, par exemple au cours d'un intervalle de temps donné durant la mise en oeuvre du procédé de fabrication additive. Plus précisément, le dispositif de traitement 26 est configuré selon les résultats de la procédure d'étalonnage pour déterminer, pour chaque espèce chimique identifiée, et à partir du signal de détection reçu depuis chaque détecteur 24, la quantité de matière de ladite espèce chimique qui s'est évaporée sous forme de fumée.

Par exemple, pour chaque espèce chimique détectée, le dispositif de traitement 26 est configuré pour déterminer la quantité de matière qui s'est évaporée sous forme de fumée en multipliant la proportion de ladite espèce chimique dans les fumées d'évaporation 7 par un coefficient prédéterminé. Un tel coefficient est, par exemple, déterminé au cours de l'étalonnage de l'installation 2, le signal de fluorescence 25 émis au cours d'un tel étalonnage permettant l'obtention dudit coefficient.

Avantageusement, dans le cas où le système de fabrication 4 est configuré pour la mise en oeuvre d'un procédé de fabrication additive non pas sous vide mais dans une atmosphère gazeuse, le dispositif de traitement 26 est configuré pour tenir compte de l'atténuation du ou des gaz constituant l'atmosphère. De tels gaz sont, par exemple, des gaz inertes tels que l'argon ou l'hélium.

Un tel traitement est avantageux, dans la mesure où l'atténuation d'un gaz est susceptible de varier avec sa pression, ainsi qu'avec l'énergie des photons qui le traversent. Par exemple, un tel traitement est avantageux pour la mesure des proportions en espèces chimiques légères, qui émettent généralement des photons de fluorescence plus fortement atténués par l'atmosphère ambiante que les photons de fluorescence émis par des espèces chimiques plus lourdes.

Avantageusement, le dispositif de traitement 26 est configuré pour fonctionner selon un premier mode d'analyse, un deuxième mode d'analyse, ou encore une combinaison du premier mode d'analyse et du deuxième mode d'analyse.

Dans le premier mode d'analyse, le dispositif de traitement 26 est configuré pour déterminer la composition des fumées d'évaporation 7 à partir d'une partie du signal de détection présentant une durée longue, c'est-à-dire plusieurs fois supérieure à une durée d'interaction du faisceau de particules 17 issu de l'émetteur 16 avec le lit de poudres 18. Une telle durée d'interaction est définie comme le résultat de la division, par la vitesse à laquelle le faisceau de particules 17 issu de l'émetteur 16 balaye la surface du lit de poudres 18, de l'étendue spatiale de la zone du lit de poudres 18 qui est irradiée par ledit faisceau de particules 17.

Par « déterminer la composition des fumées d'évaporation », il est entendu, au sens de la présente invention, identifier tout ou partie des espèces chimiques présentes dans les fumées d'évaporation 7, voire encore détecter les proportions relatives, dans les fumées d'évaporation 7, de chaque espèce chimique identifiée, ou encore déterminer la quantité de matière qui s'est évaporée sous forme de fumée pour chaque espèce identifiée.

Dans le deuxième mode d'analyse, le dispositif de traitement 26 est configuré pour déterminer la composition des fumées d'évaporation 7 à partir d'une partie du signal de détection présentant une durée courte, c'est-à-dire du même ordre de grandeur ou inférieure à la durée d'interaction du faisceau de particules 17 issu de l'émetteur 16 avec le lit de poudres 18.

Le premier mode d'analyse est avantageux, dans la mesure où le recours à des durées longues accroît le rapport signal sur bruit du signal de détection, le bruit comprenant, dans ce cas, les photons qui ne sont pas des photons de fluorescence émis par les fumées d'évaporation. Toutefois, un tel mode d'analyse ne permet généralement pas d'associer une composition de fumées à une position précise du lit de poudres ou de la pièce 9 en cours de réalisation.

Le deuxième mode d'analyse est avantageux, dans la mesure où le recours à des durées courtes autorise une bonne résolution spatiale, c'est-à-dire qu'il autorise généralement d'associer une composition de fumées à une position précise du lit de poudres ou de la pièce 9 en cours de réalisation. Toutefois, avec un tel mode d'analyse, le rapport signal sur bruit du signal de détection est généralement inférieur à celui qui aurait été obtenu avec le premier mode d'analyse.

Comme énoncé précédemment, le dispositif de traitement 26 est configuré pour fonctionner selon une combinaison du premier mode d'analyse et du deuxième mode d'analyse, c'est-à-dire que le dispositif de traitement 26 est susceptible de déterminer successivement la composition des fumées d'évaporation 7 à partir de parties (notamment des parties successives) du signal de détection présentant une durée courte, et, simultanément, déterminer la composition des fumées d'évaporation 7 à partir d'une partie du signal de détection présentant une durée longue (notamment formée d'une pluralité de parties présentant une durée courte).

De préférence, le dispositif de traitement 26 est également configuré pour associer les résultats des différents traitements opérés sur le signal de détection à une position dans l'espace dans un repère prédéterminé, par exemple un repère attaché au système de fabrication 4.

Le fonctionnement de l'installation de fabrication additive 2 va maintenant être décrit, en référence à la figure 1.

Le procédé de fabrication additive est mis en oeuvre dans le système de fabrication 4, sur le plateau support 8 duquel un lit de poudres 18 est agencé. L'émetteur 16 émet un faisceau de particules 17 pour mettre en fusion localement le lit de poudres 18. En outre, l'organe de déflexion 20 défléchit le faisceau de particules 17 issu de l'émetteur 16 afin de modifier, au cours du temps, la zone du lit de poudres 18 qui est irradiée par ledit faisceau de particules 17 issu de l'émetteur 16. La fusion du lit de poudres 18 conduit généralement à la formation de fumées d'évaporation 7.

En outre, chaque source X 22 émet un faisceau 23 de rayons X qui irradie au moins une partie des fumées d'évaporation 7.

Les espèces chimiques présentes dans la partie des fumées d'évaporation 7 qui est irradiée par le faisceau 23 de rayons X absorbent au moins partiellement les photons X reçus en provenance de la source X 22, ce qui conduit à leur excitation. Les espèces chimiques excitées se désexcitent ensuite en émettant des photons de fluorescence, qui constituent le signal de fluorescence.

Chaque détecteur 24 détecte au moins une partie du signal de fluorescence 25 et génère, en réponse, un signal électrique correspondant, dit « signal de détection », dont la valeur, à un instant donné, est proportionnelle à l'énergie déposée par ladite partie du signal de fluorescence 25 dans le détecteur 24 lors dudit instant.

Le dispositif de traitement 26 reçoit chaque signal de détection et détermine la composition des fumées d'évaporation 7 à partir dudit signal de détection, en fonctionnant selon le premier mode d'analyse et/ou le deuxième mode d'analyse (par exemple, en fonction de réglages définis par un opérateur). De préférence, le dispositif de traitement 26 met en oeuvre une correction indicative de la transmission d'un ou plusieurs gaz éventuellement présents dans le système de fabrication 4.

Par exemple, à partir du signal de détection, le dispositif de traitement 26 identifie les espèces chimiques présentes dans les fumées d'évaporation 7. Le dispositif de traitement 26 calcule également la proportion relative de chaque espèce chimique identifiée dans les fumées d'évaporation 7.

En outre, le dispositif de traitement 26 calcule, pour chaque espèce chimique détectée, la quantité de matière qui s'est évaporée sous forme de fumée au cours d'un intervalle de temps donné durant la mise en oeuvre du procédé de fabrication additive.

Sur la figure 2, est illustré un deuxième mode de réalisation d'une installation 2 de fabrication additive selon l'invention. L'installation 2 de la figure 2 se distingue de l'installation 2 de la figure 1 en ce que son système de fabrication 4 est destiné à la mise en oeuvre d'un procédé de fabrication additive DED. Dans ce cas, le plafond 10 et la paroi latérale 12 sont optionnels.

Dans un tel mode de réalisation, il n'est pas fait recours à un lit de poudres. Au contraire, la matière fusible est apportée, sous forme de poudre ou d'un fil par un bras 28 mobile dans la cavité 14, plus précisément au niveau d'une partie terminale 30 du bras 28. Par « partie terminale du bras », il est entendu la partie du bras 28 qui est la plus proche du substrat. Dans un procédé de fabrication additive DED, un tel substrat est un plateau, ou encore la pièce 9 en cours de fabrication elle-même (cas d'une réparation ou d'un ajout de fonction, notamment).

En outre, dans ce mode de réalisation, l'émetteur 16 prend la forme d'une source d'énergie intégrée au bras 28. L'émetteur 16 est une source de particules, ou encore une source de chaleur, agencée pour mettre en fusion la matière fusible au niveau de la partie terminale 30 du bras 28. Par exemple, l'émetteur 16 est configuré pour fournir une puissance thermique comprise entre 0,5 kW (kilowatt) et 10 kW, avec des vitesses de déplacement comprises entre 0.05 m/s et 0.5 m/s.

Dans ce cas, le bain de fusion correspond à la partie de la matière fusible qui est mise en fusion du fait du fonctionnement de l'émetteur 16.

En outre, dans ce mode de réalisation, les sources X 22 et/ou les détecteurs 24 sont susceptibles d'être portées par le bras 28. De préférence, et comme cela a été évoqué en relation avec le mode de réalisation de la figure 1, le dispositif de traitement 26 est agencé à distance du système de fabrication 4.

De façon générale, chaque source X 22 est, avantageusement, configurée de sorte que le faisceau 23 de rayons X correspondant se propage à une distance comprise entre 2 cm et 10 cm, de préférence entre 3 cm et 5 cm, au-dessus d'une surface libre du bain de fusion.

En outre, chaque détecteur 24 est, avantageusement, agencé pour se trouver à une distance comprise entre 2 cm et 40 cm, de préférence entre 5 cm et 15 cm, au-dessus d'une surface libre du bain de fusion.

## Revendications

1. Méthode d'analyse de fumées d'évaporation (7) émises durant la mise en oeuvre d'un procédé de fabrication additive employant au moins une espèce chimique en tant que matière fusible, la méthode d'analyse comprenant les étapes suivantes :
- émission d'au moins un faisceau (23) de rayons X pour irradier au moins une partie des fumées d'évaporation (7) émises au cours de la mise en oeuvre du procédé de fabrication additive ;
- détection, par un détecteur (24), de photons de fluorescence émis par l'au moins une partie des fumées d'évaporation (7) irradiée par l'au moins un faisceau (23) de rayons X, et génération d'un signal de détection représentatif de l'énergie déposée par les photons de fluorescence dans le détecteur (24) ; et
- identification, à partir du signal de détection, de tout ou partie des espèces chimiques présente dans les fumées d'évaporation (7).

2. Méthode d'analyse selon la revendication 1, dans laquelle l'étape d'identification comprend la prise en compte d'une absorption des photons de fluorescence causée par au moins un gaz formant une atmosphère de travail lors de la mise en oeuvre du procédé de fabrication additive.

3. Méthode d'analyse selon la revendication 1 ou 2, comportant, en outre, une étape de détermination de la proportion relative de chaque espèce chimique identifiée dans les fumée d'évaporation (7).

4. Méthode d'analyse selon l'une quelconque des revendications 1 à 3, comportant, en outre, le calcul, à partir du signal de détection et de caractéristiques prédéterminées du procédé de fabrication additive, d'une quantité de matière de chaque espèce chimique qui s'est évaporée sous forme de fumée au cours d'un intervalle de temps donné durant la mise en oeuvre du procédé de fabrication additive.

5. Méthode d'analyse selon l'une quelconque des revendications 1 à 4, comportant, en outre, l'association du résultat de l'étape l'identification, de l'étape de détermination et/ou de l'étape de calcul à une position d'une partie d'une pièce (9) fabriquée au cours de la mise en oeuvre du procédé de fabrication additive, dans un repère prédéterminé.

6. Produit programme d'ordinateur comportant des instructions de code de programme qui, lorsqu'elles sont exécutées par un ordinateur, mettent en oeuvre les étapes de la méthode d'analyse selon l'une quelconque des revendications 1 à 5, en dehors des étapes d'émission et de détection.

7. Système d'analyse (6) pour l'analyse de fumées d'évaporation (7) émises durant la mise en oeuvre d'un procédé de fabrication additive employant au moins une espèce chimique, le système d'analyse (6) comprenant :
- au moins une source (22) de rayons X configurée pour émettre un faisceau (23) de rayons X destiné à irradier au moins une partie des fumées d'évaporation (7) émises au cours de la mise en oeuvre du procédé de fabrication additive ;
- au moins un détecteur (24) configuré pour détecter des photons de fluorescence émis par l'au moins une partie des fumées d'évaporation (7) irradiée par l'au moins un faisceau (23) de rayons X, et pour générer un signal de détection représentatif de l'énergie déposée par les photons de fluorescence dans le détecteur (24) correspondant ; et **caractérisé par**
- un dispositif de traitement (26) configuré pour identifier tout ou partie des espèces chimiques présentes dans des fumées d'évaporation (7) émises au cours de la mise en oeuvre d'un procédé de fabrication additive, à partir d'un signal de détection généré par un détecteur (24) et représentatif d'une énergie déposée, dans le détecteur (24), par des photons de fluorescence émis par au moins une partie des fumées d'évaporation (7) suite à leur irradiation par au moins un faisceau (23) de rayons X.

8. Système d'analyse selon la revendication 7, dans lequel au moins une source (22) de rayons X est configurée pour émettre un faisceau (23) de rayons X collimaté, présentant, de préférence, une section circulaire dans un plan orthogonal à sa direction de propagation, et présentant, par exemple, un diamètre compris entre 5 mm et 3 cm, préférentiellement entre 1 cm et 2 cm.

9. Système d'analyse selon la revendication 7 ou 8, dans lequel au moins une source (22) de rayons X est configurée pour émettre un faisceau (23) de rayons X collimaté dans un premier plan contenant l'axe de propagation du faisceau (23) de rayons X, et divergent dans un deuxième plan orthogonal au premier plan et contenant ledit axe de propagation, et présentant, de préférence, une épaisseur, dans le premier plan, comprise entre 5 mm et 5 cm, préférentiellement entre 1 cm et 3 cm.

10. Installation de fabrication additive (2) comprenant un système de fabrication additive (4) et un système d'analyse (6) selon l'une quelconque des revendications 7 à 9, chaque source (22) de rayons X étant configurée pour émettre un faisceau (23) de rayons X dans le système de fabrication additive (4), chaque détecteur de photons étant configuré pour collecter des photons présents dans le système de fabrication additive (4).

11. Installation (2) selon la revendication 10, dans laquelle chaque source (22) de rayons X est configurée de sorte que le faisceau (23) de rayons X correspondant se propage à une distance comprise entre 2 cm et 10 cm, de préférence entre 3 cm et 5 cm, au-dessus d'une surface libre d'un bain de fusion généré, au sein du système de fabrication additive (4), par le fonctionnement du système de fabrication additive (4).

12. Installation (2) selon l'une des revendications 10 ou 11, dans laquelle chaque détecteur (24) est agencé pour se trouver à une distance comprise entre 2 cm et 40 cm, de préférence entre 5 cm et 15 cm, au-dessus d'une surface libre d'un bain de fusion généré, au sein du système de fabrication additive (4), par le fonctionnement du système de fabrication additive (4).

## Patentansprüche

1. Verfahren zum Analysieren von Verdampfungsrauch (7), der während des Durchführens eines additiven Fertigungsprozesses unter Verwendung mindestens einer chemischen Spezies als schmelzbares Material emittiert wird, wobei das Analyseverfahren die folgenden Schritte umfasst:
- Emittieren mindestens eines Strahls (23) von Röntgenstrahlen, um mindestens einen Teil des Verdampfungsrauchs (7) zu bestrahlen, der während des Durchführens des additiven Fertigungsprozesses emittiert wird;
- Detektieren, durch einen Detektor (24), von Fluoreszenzphotonen, die von mindestens einem Teil des Verdampfungsrauchs (7) emittiert werden, der von dem mindestens einen Strahl (23) von Röntgenstrahlen bestrahlt wird, und Erzeugen eines Detektionssignals, das repräsentativ für die von den Fluoreszenzphotonen in den Detektor (24) eingebrachte Energie ist; und
- Identifizieren aller oder eines Teils der chemischen Spezien, die in dem Verdampfungsrauch (7) vorhanden sind, anhand des Detektionssignals.

2. Analyseverfahren nach Anspruch 1, wobei der Schritt des Identifizierens das Berücksichtigen einer Absorption der Fluoreszenzphotonen umfasst, die durch mindestens ein eine Arbeitsatmosphäre bildendes Gas während des Durchführens des additiven Fertigungsprozesses verursacht wird.

3. Analyseverfahren nach Anspruch 1 oder 2, das ferner einen Schritt des Bestimmens des relativen Anteils jeder in dem Verdampfungsrauch (7) identifizierten chemischen Spezies umfasst.

4. Analyseverfahren nach einem der Ansprüche 1 bis 3, das ferner das Berechnen einer Materialmenge jeder chemischen Spezies, die in einem gegebenen Zeitintervall während des Durchführens des additiven Fertigungsprozesses in Form von Rauch verdampft ist, anhand des Detektionssignals und von vorbestimmten Merkmalen des additiven Fertigungsprozesses.

5. Analyseverfahren nach einem der Ansprüche 1 bis 4, das ferner das Zuordnen des Ergebnisses des Schritts des Identifizierens, des Schritt des Bestimmens und/oder des Schritts des Berechnens zu einer Position eines Teils eines Bauteils (9), das während des Durchführens des additiven Fertigungsprozesses hergestellt wird, in einem vorbestimmten Bezugssystem.

6. Computerprogrammprodukt, das Programmcodeanweisungen umfasst, die, wenn sie von einem Computer ausgeführt werden, die Schritte des Analyseverfahrens nach einem der Ansprüche 1 bis 5, mit Ausnahme der Schritte des Emittierens und des Detektierens, durchführen.

7. Analysesystem (6) zur Analyse von Verdampfungsrauch (7), der während des Durchführens eines additiven Fertigungsprozesses unter Verwendung mindestens einer chemischen Spezies emittiert wird, wobei das Analysesystem (6) Folgendes umfasst:
- mindestens eine Röntgenstrahlenquelle (22), die dazu konfiguriert ist, dass einen Strahl (23) von Röntgenstrahlen zu emittieren, der dazu bestimmt ist, mindestens einen Teil des Verdampfungsrauchs (7) zu bestrahlen, der während des Durchführens des additiven Fertigungsprozesses emittiert wird;
- mindestens einen Detektor (24), der dazu konfiguriert ist, die Fluoreszenzphotonen zu detektieren, die von mindestens einem Teil des Verdampfungsrauchs (7) emittiert werden, der von dem mindestens einen Strahl (23) von Röntgenstrahlen bestrahlt wird, und ein Detektionssignal zu erzeugen, das repräsentativ für die von den Fluoreszenzphotonen in den Detektor (24) eingebrachte Energie ist; und **gekennzeichnet durch**
- eine Bearbeitungsvorrichtung (26), die dazu konfiguriert ist, alle oder einen Teil der chemischen Spezien zu identifizieren, die in dem Verdampfungsrauch (7) vorhanden sind, der während des Durchführens eines additiven Fertigungsprozesses emittiert wird, anhand eines Detektionssignals, das von einem Detektor (24) erzeugt wird und repräsentativ für eine Energie ist, die in den Detektor (24) durch Fluoreszenzphotonen eingebracht wird, die von mindestens einem Teil des Verdampfungsrauchs (7) nach seiner Bestrahlung mit mindestens einem Strahl (23) von Röntgenstrahlen emittiert werden.

8. Analysesystem nach Anspruch 7, wobei die mindestens eine Röntgenstrahlenquelle (22) dazu konfiguriert ist, einen kollimierten Strahl (23) von Röntgenstrahlen zu emittieren, der vorzugsweise einen kreisförmigen Querschnitt in einer zu seiner Ausbreitungsrichtung orthogonalen Ebene aufweist und zum Beispiel einen Durchmesser zwischen 5 mm und 3 cm, vorzugsweise zwischen 1 cm und 2 cm, aufweist.

9. Analysesystem nach Anspruch 7 oder 8, wobei die mindestens eine Röntgenstrahlenquelle (22) dazu konfiguriert ist, einen Strahl (23) von Röntgenstrahlen zu emittieren, der in einer ersten Ebene, die die Ausbreitungsachse des Strahls (23) von Röntgenstrahlen enthält, kollimiert ist und in einer zweiten Ebene, die orthogonal zur ersten Ebene ist und die Ausbreitungsachse enthält, divergiert und vorzugsweise eine Dicke in der ersten Ebene zwischen 5 mm und 5 cm, vorzugsweise zwischen 1 cm und 3 cm, aufweist.

10. Additive Fertigungsanlage (2), die ein additives Fertigungssystem (4) und ein Analysesystem (6) nach einem der Ansprüche 7 bis 9 umfasst, wobei jede Röntgenstrahlenquelle (22) dazu konfiguriert ist, einen Strahl (23) von Röntgenstrahlen im additiven Fertigungssystem (4) zu emittieren, wobei jeder Photonendetektor dazu konfiguriert ist, im additiven Fertigungssystem (4) vorhandene Photonen zu sammeln.

11. Anlage (2) nach Anspruch 10, wobei jede Röntgenstrahlenquelle (22) derart konfiguriert ist, dass sich der entsprechende Strahl (23) von Röntgenstrahlen in einem Abstand zwischen 2 cm und 10 cm, vorzugsweise zwischen 3 cm und 5 cm, über einer freien Oberfläche eines Schmelzbades ausbreitet, das innerhalb des additiven Fertigungssystems (4) durch die Funktionsweise des additiven Fertigungssystems (4) erzeugt wird.

12. Anlage (2) nach einem der Ansprüche 10 oder 11, wobei jeder Detektor (24) so angeordnet ist, dass er sich in einem Abstand zwischen 2 cm und 40 cm, vorzugsweise zwischen 5 cm und 15 cm, über einer freien Oberfläche eines Schmelzbades befindet, das innerhalb des additiven Fertigungssystems (4) durch die Funktionsweise des additiven Fertigungssystems (4) erzeugt wird.

## Claims

1. Method for analyzing evaporation fumes (7) emitted during the implementation of an additive manufacturing method using at least one chemical species as meltable material, the analysis method comprising the following steps:
- emitting at least one beam (23) of X-rays to irradiate at least some of the evaporation fumes (7) emitted in the course of the implementation of the additive manufacturing method;
- detecting, by a detector (24), fluorescence photons emitted by the at least some of the evaporation fumes (7) irradiated by the at least one beam (23) of X-rays, and generating a detection signal representing the energy deposited by the fluorescence photons in the detector (24); and
- identifying, from the detection signal, all or some of the chemical species present in the evaporation fumes (7).

2. Analysis method according to claim 1, wherein the identification step comprises taking account of an absorption of the fluorescence photons caused by at least one gas forming a working atmosphere during the implementation of the additive manufacturing method.

3. Analysis method according to claim 1 or 2, furthermore including a step of determining the relative proportion of each chemical species identified in the evaporation fumes (7).

4. Analysis method according to any one of claims 1 to 3, furthermore including calculating, from the detection signal and from predetermined characteristics of the additive manufacturing method, a quantity of material of each chemical species that evaporated in the form of fumes in the course of a given interval of time during the implementation of the additive manufacturing method.

5. Analysis method according to any one of claims 1 to 4, furthermore including associating the result of the identification step, the determination step and/or the calculation step with a position of a part of a piece (9) manufactured during the implementation of the additive manufacturing method, in a predetermined reference frame.

6. Computer program product including program code instructions which, when they are executed by a computer, implement the steps of the analysis method according to any one of claims 1 to 5, apart from the sending and detection steps.

7. Analysis system (6) for analyzing evaporation fumes (7) emitted during the implementation of an additive manufacturing method using at least one chemical species, the analysis system (6) comprising:
- at least one X-ray source (22) configured to emit a beam (23) of X-rays intended to irradiate at least some of the evaporation fumes (7) emitted during the implementation of the additive manufacturing method;
- at least one detector (24) configured to detect fluorescence photons emitted by the at least some of the evaporation fumes (7) irradiated by the at least one beam (23) of X-rays, and to generate a detection signal representing the energy deposited by the fluorescence photons in the corresponding detector (24); and **characterized by**
- a processing device (26) configured to identify all or some of the chemical species present in evaporation fumes (7) emitted in the course of the implementation of an additive manufacturing method, from a detection signal generated by a detector (24) and representing an energy deposited, in the detector (24), by fluorescence photons emitted by at least some of the evaporation fumes (7) following irradiation that thereof by at least one beam (23) of X-rays.

8. Analysis system according to claim 7, wherein at least one X-ray source (22) is configured to emit a collimated beam (23) of X-rays, preferably having a circular cross-section in a plane orthogonal to the propagation direction thereof, and having, for example, a diameter of between 5 mm and 3 cm, preferentially between 1 cm and 2 cm.

9. Analysis system according to claim 7 or 8, wherein at least one X-ray source (22) is configured to emit a collimated beam (23) of X-rays in a first plane containing the propagation axis of the beam (23) of X-rays, and diverging in a second plane orthogonal to the first plane and containing said propagation axis, and preferably having a thickness, in the first plane, of between 5 mm and 5 cm, preferentially between 1 cm and 3 cm.

10. Additive manufacturing plant (2) comprising an additive manufacturing system (4) and an analysis system (6) according to any one of claims 7 to 9, each X-ray source (22) being configured to emit a beam (23) of X-rays in the additive manufacturing system (4), each photon detector being configured to collect photons present in the additive manufacturing system (4).

11. Plant (2) according to claim 10, wherein each X-ray source (22) is configured so that the corresponding beam (23) of X-rays propagates at a distance between 2 cm and 10 cm, preferably between 3 cm and 5 cm, above a free surface of a melting bath generated, in the additive manufacturing system (4), by the operation of the additive manufacturing system (4).

12. Plant (2) according to one of claims 10 or 11, wherein each detector (24) is arranged to be located at a distance of between 2 cm and 40 cm, preferably between 5 cm and 15 cm, above a free surface of a melting bath generated, in the additive manufacturing system (4), by the operation of the additive manufacturing system (4).
